# FASCICULE DE BREVET EUROPEEN

(11) **EP 1 674 413 B1**
(45) Date de publication et mention de la délivrance du brevet: **29.07.2009**
(21) Numéro de dépôt: 05301068.2
(22) Date de dépôt: 16.12.2005
(51) Int. Cl.: B65G 47/51, B23P 19/00

(54) **Procédé pour la gestion d'un flux de pièces et installation pour la mise en oeuvre de ce procédé**
Verfahren zur Steuerung eines Stroms von Werkstücken und Anordnung zur Durchführung des Verfahrens
Method for controlling a flow of workpieces and installation for carrying out the method

(30) Priorité: 23.12.2004 FR 0453194
(43) Date de publication de la demande: 28.06.2006
(73) Titulaire: SALM SA Société par actions simplifiée, 68660 LIEPVRE (FR)
(72) Inventeur: Offner, Olivier, 67620, Soufflenheim (FR)
(74) Mandataire: Rhein, Alain

(56) Documents cités:
- WO-A-02/102674
- DE-B- 1 014 022
- FR-A- 2 395 386
- GB-A- 1 034 572
- GB-A- 2 024 762
- US-A- 4 720 228

## Description

L'invention concerne un procédé pour la gestion, au niveau d'une zone tampon, d'un flux de pièces défilant sur un convoyeur amont et en provenance d'une première unité de traitement, ceci dans l'attente de l'approvisionnement par ces pièces d'un convoyeur aval d'une seconde unité de traitement. L'invention a, encore, trait à une installation pour la gestion d'un tel flux de pièces et pour la mise en oeuvre de ce procédé.

L'invention concerne le domaine de la fabrication d'installations destinées à assurer la gestion d'un flux de pièces au niveau d'une zone tampon définie entre deux postes de traitement de ces pièces.

L'on connaît, d'ores et déjà, des installations permettant une telle gestion et comportant des moyens pour prélever des pièces défilant sur un premier convoyeur et pour empiler ces pièces, directement les unes sur les autres, au sein d'un empilement de pièces localisé au niveau d'une zone tampon, ceci dans l'attente de prélever les pièces de cet empilement pour les déposer sur un second convoyeur.

Une telle installation fonctionne parfaitement dans le cadre de la gestion de pièces identiques et fabriquées en série. Cependant, une telle installation ne permet, aucunement, la gestion de pièces de formes différentes qui, lorsqu'elles sont empilées, constituent, dans le meilleur des cas, un empilement particulièrement instable. Tel est, plus particulièrement, le cas des pièces entrant dans la composition d'un élément de mobilier, notamment un élément de cuisine, de salle de bain ou analogue.

L'on connaît, également, le document GB-1.034.572 concernant un perfectionnement relatif à la production de briques ou analogue.

Ce document décrit une installation pour la gestion, au niveau d'une zone tampon, d'un flux de briques défilant sur un convoyeur amont et en provenance d'un dispositif d'extrusion, en vue de leur séchage et pour réaliser ensuite l'approvisionnement en briques sèches d'un convoyeur aval. Cette installation comporte:
- des moyens pour réaliser, à l'entrée de la zone tampon, des piles de palettes sur lesquelles sont disposées plusieurs briques provenant du convoyeur amont.
- des moyens pour stocker, dans une zone de stockage définie au niveau de la zone tampon, les piles de palettes ainsi réalisées, ceci dans l'attente de leur séchage et l'approvisionnement du convoyeur aval par les briques séchées disposées sur les palettes de ces piles;
- à la sortie de la zone tampon, des moyens pour approvisionner le convoyeur aval en briques sèches disposées sur les palettes des piles.

La présente invention se veut à même de remédier aux inconvénients des installations de l'état de la technique par le biais d'un nouveau procédé de gestion et d'une nouvelle installation, plus particulièrement conçue apte à mettre en oeuvre ce procédé.

A cet effet, l'invention concerne un procédé pour la gestion, au niveau d'une zone tampon, d'un flux de pièces, notamment entrant dans la composition d'au moins un élément de mobilier, défilant sur un convoyeur amont et en provenance d'une première unité de traitement, ceci dans l'attente de l'approvisionnement par ces pièces d'un convoyeur aval d'une seconde unité de traitement, le procédé consistant en ce que :
- l'on réalise, à l'entrée de la zone tampon, au moins une pile de panneaux comportant, chacun, un fond dans lequel sont disposées une ou plusieurs pièces provenant du convoyeur amont ;
- après la réalisation d'au moins une pile de panneaux, l'on stocke une telle pile dans une zone de stockage définie au niveau de la zone tampon, ceci dans l'attente de l'approvisionnement du convoyeur aval par la ou les pièces contenues dans les panneaux d'une telle pile ;
- l'on réalise, à la sortie de la zone tampon, l'approvisionnement du convoyeur aval en retirant la ou les pièces disposées dans le fond de chacun des panneaux d'au moins une pile pour les disposer sur le convoyeur aval.

Selon une autre caractéristique de l'invention, lorsque l'on réalise une pile de panneaux dans lesquels sont disposées des pièces, l'on empile, successivement, un panneau vide par-dessus un panneau rempli et l'on dispose dans le fond du premier panneau vide de cette pile ainsi que dans le fond de tout nouveau panneau vide que l'on empile par-dessus un panneau rempli, au moins une pièce que l'on a prélevé par l'intermédiaire d'un moyen de prélèvement au niveau du convoyeur amont.

Une caractéristique additionnelle consiste en ce que, lorsque l'on réalise une pile de panneaux dans lesquels sont disposées des pièces, l'on prélève ces pièces, de manière individuelle ou par jeu de plusieurs pièces, au niveau du convoyeur amont et l'on dispose au moins une telle pièce et/ou au moins un tel jeu de pièces dans un panneau, selon une ou plusieurs rangées juxtaposées et espacées.

Une caractéristique additionnelle consiste en ce que, lorsque l'on réalise l'approvisionnement du convoyeur aval, d'une part, l'on vide, un à un, les panneaux d'une pile en retirant, par l'intermédiaire d'un moyen de prélèvement, la ou les pièces disposées dans le fond d'un tel panneau pour les disposer sur le convoyeur aval et, d'autre part, l'on assure, au fur et à mesure, l'évacuation, par l'intermédiaire d'un moyen de prélèvement, des panneaux de la pile après qu'ils aient été vidés, ceci pour constituer au moins un empilement de panneaux vides évacués.

L'invention concerne, encore, une installation pour la gestion, au niveau d'une zone tampon, d'un flux de pièces, notamment entrant dans la composition d'au moins un élément de mobilier, défilant sur un convoyeur amont et en provenance d'une première unité de traitement, ceci dans l'attente de l'approvisionnement par ces pièces d'un convoyeur aval d'une seconde unité de traitement, l'installation comportant :
- des panneaux comportant, chacun, un fonds;
- des moyens pour réaliser, à l'entrée de la zone tampon, au moins une pile de panneaux dans le fond desquels sont disposées une ou plusieurs pièces provenant du convoyeur amont ;
- des moyens pour stocker, dans une zone de stockage définie au niveau de la zone tampon, au moins une pile de panneaux ainsi réalisée, ceci dans l'attente de l'approvisionnement du convoyeur aval par les pièces contenues dans les panneaux d'une telle pile ;
- à la sortie de la zone tampon, des moyens pour approvisionner le convoyeur aval en pièces disposées dans le fond de chacun des panneaux d'au moins une pile.

Selon une autre caractéristique, les moyens pour réaliser une pile comportent un moyen pour prélever au moins un panneau vide au niveau d'un empilement de panneaux vides et pour disposer un tel panneau vide, soit sur un moyen de stockage que comporte l'installation au niveau de la zone tampon, soit sur un panneau ou sur une pile de panneaux disposé sur un tel moyen de stockage.

Une caractéristique additionnelle consiste en ce que les moyens pour réaliser une pile comportent un moyen pour prélever au moins une pièce au niveau du convoyeur amont et pour disposer cette ou ces pièces dans le fond d'un panneau, soit disposé sur un moyen de stockage que comporte l'installation au niveau de la zone tampon, soit disposé lui-même sur un panneau ou sur une pile de panneaux disposé sur un tel moyen de stockage.

Encore une autre caractéristique concerne le fait que le moyen pour prélever au moins une pièce est conçu pour prélever, en fonction des caractéristiques de cette ou ces pièces, une unique pièce ou une pluralité de pièces et pour déposer, au fur et à mesure, la ou les pièces prélevées simultanément dans le fond d'un panneau selon une ou plusieurs rangées juxtaposées et espacées.

Selon une caractéristique additionnelle, les moyens pour approvisionner le convoyeur aval comportent, d'une part, des moyens pour retirer la ou les pièces disposées dans le fond de chacun des panneaux d'une pile pour les disposer sur le convoyeur aval et, d'autre part, des moyens pour évacuer, au fur et à mesure, chaque panneau vide de cette pile après que toutes les pièces aient été retirées d'un tel panneau, ceci pour réaliser, au niveau d'un moyen de stockage, au moins un empilement de panneaux vides.

En fait, les moyens pour retirer la ou les pièces d'un panneau et/ou les moyens pour évacuer un panneau vide sont constitués par un moyen pour prélever, respectivement, au moins une pièce et/ou un panneau vide.

Une autre caractéristique consiste en ce que le moyen pour prélever, selon le cas, un panneau vide et/ou au moins une pièce est constitué par un préhenseur monté mobile au moins par rapport au convoyeur, selon le cas, amont et/ou aval, notamment au dessus d'un tel convoyeur, ainsi que, selon le cas, par rapport à au moins une pile de panneaux contenant, chacun, au moins une pièce et/ou par rapport à au moins un empilement de panneaux vides.

Les panneaux destinés à contenir au moins une pièce sont avantageusement constitués, d'une part, par un cadre et, d'autre part, par un fond implanté à l'intérieur de ce cadre en sorte que la surface de réception d'au moins une pièce que présente ce fond soit située à une distance du bord supérieur de ce cadre au moins égale à l'épaisseur d'une telle pièce.

Les avantages de la présente invention consistent en ce que des pièces de différentes formes et de différentes dimensions, issues d'une première unité de traitement, peuvent être stockées au niveau d'une zone tampon dans l'attente de l'approvisionnement d'une seconde unité de traitement. De manière avantageuse, le stockage de ces pièces se fait dans le fond de panneaux empilés les uns sur les autres de sorte que ces pièces ne sont aucunement empilées directement les unes sur les autres comme dans l'état de la technique et avec les inconvénients susmentionnés. Au contraire, la présente invention, au travers de la disposition des pièces dans le fond de panneaux empilés les uns sur les autres, permet une stabilité remarquable d'une pile de ces panneaux, autorisant, notamment, un déplacement d'une telle pile entre l'entrée et la sortie de la zone tampon.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels:
- la figure 1 est une vue schématisée et de dessus de l'installation conforme à la présente invention ;
- la figure 2 est une vue schématisée, de côté et en détail de l'entrée de la zone tampon :

- la figure 3 est une vue schématisée, de côté et en détail de la sortie de la zone tampon ;
- la figure 4 est une vue schématisée et en perspective d'un panneau vide ;
- la figure 5 est une vue schématisée et en coupe du panneau représenté figure 4.

La présente invention concerne le domaine de la fabrication d'installations destinées à assurer la gestion d'un flux de pièces au niveau d'une zone tampon définie entre deux postes de traitement de ces pièces.

Si la présente invention trouvera une application particulièrement appropriée dans le cadre de pièces entrant dans la composition d'au moins un d'élément de mobilier, notamment un élément de cuisine, de salle de bain ou analogue, cette invention n'y est, cependant, aucunement limitée.

De plus, on observera que cette invention sera particulièrement adaptée à un flux de pièces, d'une part, provenant d'une première unité de traitement constituée par une unité de découpe et, d'autre part, dans l'attente de l'approvisionnement par ces pièces d'une seconde unité de traitement constituée par une unité d'usinage et/ou de finition, sans que la présente invention n'y soit, cependant, aucunement limitée.

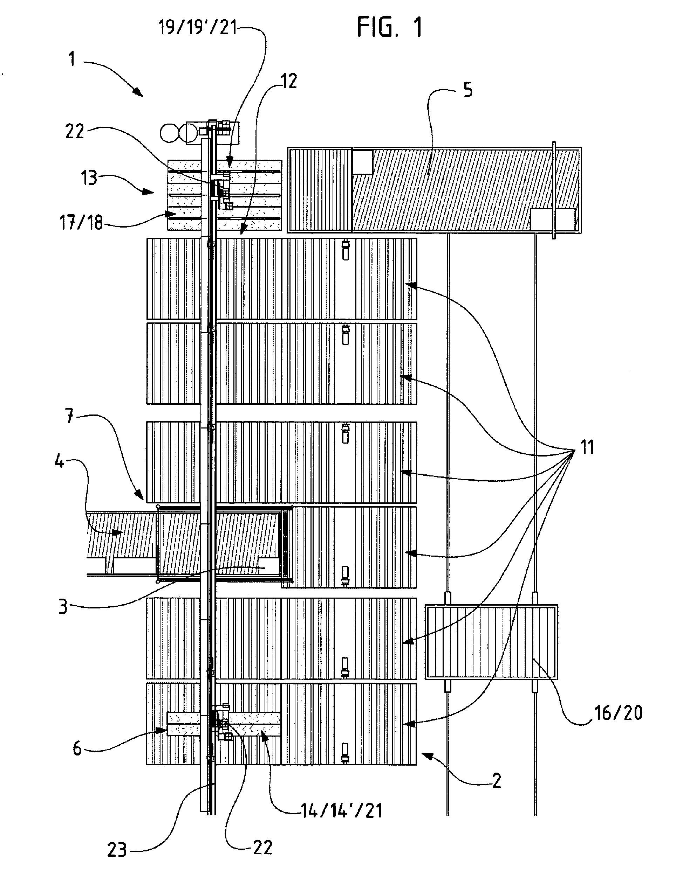

Tel que visible sur les figures 1 à 3 en annexe, l'invention concerne une installation 1 pour la gestion, au niveau d'une zone tampon 2, d'un flux de pièces 3 défilant sur convoyeur amont 4 qui, d'une part, achemine ces pièces 3 en provenance d'une première unité de traitement (non représentée) et, d'autre part, jouxte la zone tampon 2 ou, et de préférence, pénètre dans cette zone tampon 2.

Cette installation 1 est, encore, conçue pour assurer la gestion, au niveau d'une telle zone tampon 2, d'un tel flux de pièces 3 dans l'attente de l'approvisionnement par ces pièces 3 d'un convoyeur aval 5, d'une part, qui achemine ces pièces 3 en direction d'une seconde unité de traitement (non représentée) et, d'autre part, qui pénètre dans ladite zone tampon 2 ou, et de préférence, qui jouxte cette zone tampon 2.

Selon l'invention, l'installation 1 comporte :
- des moyens 6 pour réaliser, à l'entrée 7 de la zone tampon 2, au moins une pile 8 de panneaux 9 comportant, chacun, un fond 10 dans lequel sont disposées une ou plusieurs pièces 3 provenant du convoyeur amont 4 ;
- des moyens 11 pour stocker, dans une zone de stockage définie au niveau de la zone tampon 2, au moins une pile 8 de panneaux 9 ainsi réalisée, ceci dans l'attente de l'approvisionnement du convoyeur aval 5 par les pièces 3 contenues dans les panneaux 9 d'une telle pile 8 ;
- à la sortie 12 de la zone tampon 2, des moyens 13 pour approvisionner le convoyeur aval 5 en pièces 3 disposées dans le fond 10 de chacun des panneaux 9 d'au moins une pile 8.

Selon une autre caractéristique de l'invention, les moyens 6 pour réaliser une pile 8 de panneaux 9 comportent un moyen 14 pour prélever au moins un panneau vide 9' au niveau d'un empilement 15 de panneaux vides 9' (stocké sur un moyen de stockage 11) et pour disposer un tel panneau vide 9', soit sur un moyen de stockage 11 que comporte l'installation 1 au niveau de la zone tampon 2, soit sur un panneau rempli 9 (c'est à dire contenant une ou plusieurs pièces 3) ou sur une pile 8 de panneaux remplis 9 disposé(e) sur un tel moyen de stockage 11.

A ce propos, il convient d'observer qu'un tel moyen de stockage 11, sur lequel l'on dispose un panneau vide 9' ou sur lequel est, déjà, disposé (e) un panneau rempli 9 ou une pile 8 de panneaux remplis 9, est implanté à proximité du convoyeur amont 4, notamment de manière à jouxter ce dernier 4. Un mode préféré de réalisation de l'invention consiste en ce que l'installation 1 comporte deux moyens de stockage 11 implantés, chacun, de part et d'autre du convoyeur amont 4.

Selon une autre caractéristique de l'invention, les moyens 6 pour réaliser une pile 8 de panneaux remplis 9 comportent un moyen 14' pour prélever au moins une pièce 3 au niveau du convoyeur amont 4 et pour disposer cette ou ces pièces 3 dans le fond 10 d'un panneau vide 9' ou dans le fond 10 d'un panneau rempli 9 de manière incomplète.

Un tel panneau 9 ; 9' est, soit disposé sur un moyen 11 de stockage que comporte l'installation 1 au niveau de la zone tampon 2, soit disposé lui-même 9 ; 9' sur un panneau rempli 9 ou sur une pile 8 de panneaux remplis 9 disposé(e) sur un tel moyen de stockage 11.

A ce propos, on observera que le moyen 14' pour prélever au moins une pièce 3 est, de préférence, conçu pour prélever, à la fois, un jeu de plusieurs pièces 3 disposées selon une file sur le convoyeur amont 4 et pour déposer un tel jeu de pièces 3 au fond 10 d'un panneau, selon le cas, vide 9' ou rempli 9 de manière incomplète.

Selon une caractéristique additionnelle, le moyen 14' pour prélever au moins une pièce 3 est conçu pour prélever, en fonction des caractéristiques de cette ou ces pièces 3 (plus particulièrement en fonction de la taille et/ou de la forme de cette ou ces pièces 3), une unique pièce 3 ou une pluralité de pièces 3 (regroupées au sein d'un jeu de pièces 3) et pour déposer, au fur et à mesure, la ou les pièces 3 prélevées simultanément dans le fond 10 d'un panneau (vide 9' ou incomplètement rempli 9').

A ce propos, on observera que, en fonction des caractéristiques de cette ou ces pièces 3, le moyen 14' dispose dans le fond 10 d'un panneau (vide 9' ou incomplètement rempli 9), soit une pièce unique 3, soit une pluralité de pièces 3 (regroupées ou non en jeux de pièces 3), soit encore une pluralité de jeux de pièces 3, ceci selon une ou plusieurs rangées juxtaposées et espacées, notamment parallèles.

Il convient d'observer que, pour ce faire, l'installation 1 comporte des moyens conçus aptes, d'une part, à relever les caractéristiques des pièces 3 défilant sur le convoyeur amont 4 et, d'autre part et en fonction de ces caractéristiques, commander le moyen 14 pour prélever un panneau vide 9 ainsi que le moyen 14' pour prélever les pièces 3, en vue d'un remplissage optimal d'un tel panneau 9, ceci selon une ou plusieurs rangées de pièces 3.

Un mode de réalisation préféré de l'invention consiste en ce que le moyen 14 pour prélever un panneau vide 9' et le moyen 14' pour prélever au moins une pièce 3 sont constitués par un seul et unique moyen décrit plus en détail ci-dessous.

Une autre caractéristique de l'invention consiste en ce que l'installation comporte des moyens 16 pour acheminer une pile 8 de panneaux 9 comportant, chacun 9, au moins une pièce 3 disposée dans son fond 10, ceci entre l'entrée 7 de la zone tampon et la sortie 12 de cette zone tampon 2.

A ce propos, on observera que de tels moyens 16 d'acheminement sont, au moins en partie, constitués par un convoyeur 20, notamment à rouleaux, monté en déplacement par rapport aux moyens de stockage 11 d'au moins une pile 8 de panneaux 9 ou d'au moins un empilement 15 de panneaux vides 9', plus particulièrement à l'avant de ces moyens de stockage 11.

En ce qui concerne les moyens 13 pour approvisionner le convoyeur aval 5, ceux-ci 13 comportent, d'une part, des moyens 17 pour retirer la ou les pièces 3 disposées dans le fond 10 de chacun des panneaux 9 d'une pile 8 pour les disposer sur le convoyeur aval 5 et, d'autre part, des moyens 18 pour évacuer, au fur et à mesure, chaque panneau vide 9' de cette pile 8 après que toutes les pièces 3 aient été retirées d'un tel panneau rempli 9. En fait, ces panneaux vides 9' sont évacuées pour réaliser, au niveau d'un moyen de stockage 11 que comporte l'installation 1, au moins un empilement 15' de panneaux vides 9'.

A ce propos, il convient d'observer que les moyens 17 pour retirer la ou les pièces 3 disposées dans le fond 10 d'un panneau 9 sont constitués par un moyen 19 pour prélever au moins une pièce 3, de préférence conçu pour prélever, de manière simultanée, l'intégralité des pièces 3 contenues dans un tel panneau 9.

De même, les moyens 18 pour évacuer, au fur et à mesure, les panneaux vides 9' sont constitués par un moyen 19' pour prélever un tel panneau vide 9'.

Un mode de réalisation préféré de l'invention consiste en ce que le moyen 19 pour prélever au moins une pièce 3 et le moyen 19' pour prélever un panneau vide 9' sont constitués par un seul et unique moyen décrit plus en détail ci-dessous.

Encore une autre caractéristique de l'invention consiste en ce que l'installation 1 comporte des moyens 16 pour acheminer un empilement 15' de panneaux vides 9' entre la sortie 12 de la zone tampon 2 et l'entrée 7 de cette zone tampon 2.

De tels moyens 16 d'acheminement sont, au moins en partie, constitués par un convoyeur 20, notamment à rouleaux, monté en déplacement par rapport aux moyens de stockage 11 d'au moins une pile 8 de panneaux 9 ou d'au moins un empilement 15, 15' de panneaux vides 9', plus particulièrement à l'avant de ces moyens de stockage 11.

A ce propos, il convient d'observer que les moyens 11 de stockage d'au moins une pile 8 de panneaux remplis 9 ou d'au moins un empilement 15, 15' de panneaux vides 9' sont constitués par des moyens d'acheminement d'une telle pile 8 ou d'un tel empilement 15, 15' de panneaux 9 ; 9'.

En fait, de tels moyens d'acheminement sont, au moins en partie, constitués par un convoyeur, notamment à rouleaux.

Selon une caractéristique additionnelle de l'invention, le moyen 14, 14', 19, 19' pour prélever, selon le cas, un panneau vide 9' et/ou au moins une pièce 3 est constitué par un préhenseur 21 monté mobile au moins par rapport au convoyeur, selon le cas, amont 4 et/ou aval 5, notamment au dessus d'un tel convoyeur 4 ; 5, ainsi que, selon le cas, par rapport à au moins une pile 8 de panneaux 9 contenant, chacun, au moins une pièce 3 et/ou par rapport à au moins un empilement 15, 15' de panneaux vides 9'.

Selon un premier mode de réalisation, l'installation 1 comporte un seul et unique préhenseur monté mobile par rapport aux convoyeurs amont 4 et aval 5, ainsi que par rapport à au moins une pile 8 de panneaux remplis 9 et par rapport à au moins un empilement 15, 15' de panneaux vides 9'.

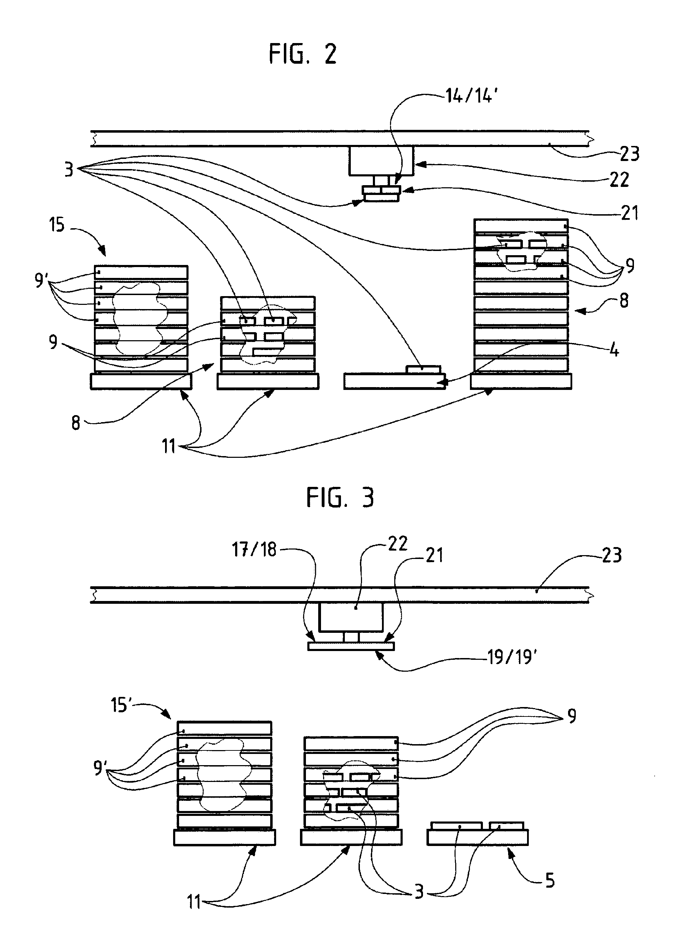

Cependant et selon un mode préféré de réalisation de l'invention, l'installation comporte deux préhenseurs 21. Le premier 21 de ces préhenseurs est monté mobile par rapport au convoyeur amont 4 ainsi que par rapport à au moins une pile 8 de panneaux remplis 9 et par rapport à au moins un empilement 15 de panneaux vides 9' (figure 2).

Le second préhenseur 21 est monté mobile par rapport au convoyeur aval 5 ainsi que par rapport à au moins une pile 8 de panneaux remplis 9 et par rapport à au moins un empilement 15' de panneaux vides 9' (figure 3).

Une caractéristique additionnelle consiste en ce qu'un tel préhenseur 21 comporte des moyens de succion, notamment par aspiration, destinés à coopérer avec un panneau vide 9' et/ou avec au moins une pièce 3 afin de prélever ceux-ci 9', 3.

En fait, un tel préhenseur 21 est monté en déplacement, notamment en translation et/ou par l'intermédiaire d'un chariot 22, sur un rail de guidage 23.

Selon un premier mode de réalisation, l'installation 1 comporte un premier rail de guidage s'étendant par-dessus le convoyeur amont 4 ainsi que par-dessus au moins une pile 8 de panneaux 9 (notamment par-dessus une pile 8 en cours de réalisation) et par-dessus au moins un empilement 15 de panneaux vides 9'. L'installation comporte, encore, un second rail de guidage s'étendant par-dessus le convoyeur aval 5 ainsi que par-dessus au moins une pile 8 de panneaux 9 (notamment par-dessus une pile 8 en cours d'approvisionnement du convoyeur 5) et par-dessus au moins un empilement 15' de panneaux vides 9'.

Cependant et selon un mode de réalisation préféré de l'invention, l'installation 1 comporte un seul rail de guidage 23 s'étendant, d'une part, par-dessus le convoyeur amont 4 ainsi que par-dessus au moins une pile 8 de panneaux 9 (notamment par-dessus une pile 8 en cours de réalisation) et par-dessus au moins un empilement 15 de panneaux vides 9' et, d'autre part, par-dessus le convoyeur aval 5 ainsi que par-dessus au moins une pile 8 de panneaux 9 (notamment par-dessus une pile 8 en cours d'approvisionnement du convoyeur 5) et par-dessus au moins un empilement 15' de panneaux vides 9'.

Les panneaux 9 destinés à contenir au moins une pièce 3 du type susmentionné, voire une pluralité de pièces 3 disposées sous forme d'une ou plusieurs rangées juxtaposées et espacées, sont avantageusement constitués, d'une part, par un cadre 24 et, d'autre part, par un fond 10 implanté à l'intérieur de ce cadre 24 en sorte que la surface de réception 25 d'au moins une pièce 3 (que présente ce fond 10 et sur laquelle 25 est disposée cette ou ces pièces 3) soit située à une distance 26 du bord supérieur 27 de ce cadre 24 au moins égale à l'épaisseur d'une telle pièce 3.

Un tel mode de réalisation permet, avantageusement, de disposer une ou plusieurs pièces 3 à l'intérieur du panneau 9 sans que cette ou ces pièces 3 dépassent de ce panneau 9. Ceci permet, également et de manière avantageuse, de superposer un panneau 9 par-dessus un panneau rempli 9 au sein d'une pile 8 en garantissant une stabilité parfaite d'une telle pile 8.

Il convient d'observer qu'un tel panneau 9 est conçu en sorte de présenter le moins de déformation possible aussi bien à vide que lorsqu'il est rempli de manière optimale avec une ou plusieurs pièces 3.

Pour ce faire, le cadre 24 d'un tel panneau 9 est constitué par un assemblage, notamment à angle droit, de tubes 28 rigides, plus particulièrement réalisés en un matériau métallique ou analogue, notamment en acier. De tels tubes 28 sont, par exemple, constitués par des tubes creux de section carrée ou rectangulaire.

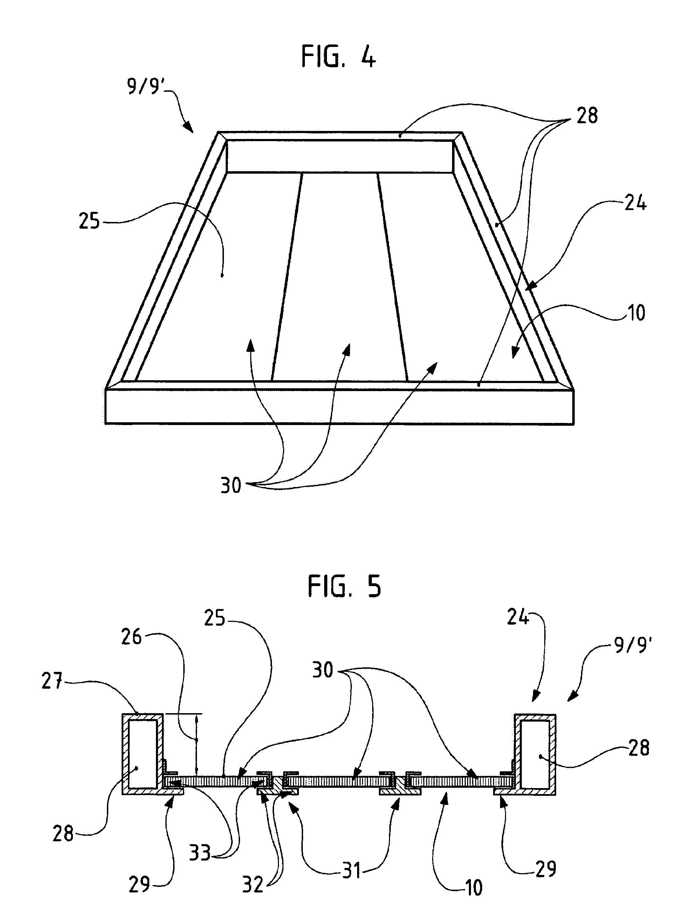

Tel que visible sur la figure 5, chaque tube 28 du cadre 24 comporte une aile latérale 29 s'étendant (plus particulièrement de manière perpendiculaire par rapport à ce tube 28) en direction d'un autre tube 28 de ce cadre 24 (plus particulièrement en direction d'un tube 28 qui lui est parallèle) et sur laquelle 29 vient reposer le fond 10.

A ce propos, on observera que ce fond 10 est constitué par au moins une plaque 30, voire par une juxtaposition de plaques 30 venant au moins reposer sur l'aile latérale 29 équipant au moins deux tubes 28.

Selon une autre caractéristique, une telle plaque 30 est définie en un matériau alvéolaire dont les alvéoles, notamment de forme hexagonale, s'étendent perpendiculairement à la surface de réception 25 d'au moins une pièce 3.

Une telle structure permet de conférer à ce fond 10 (et, par conséquent, au panneau 9) une rigidité adaptée en sorte que ce fond 10 (et, par conséquent, ce panneau 9) présente le moins de déformation possible aussi bien à vide que lorsqu'il est rempli de manière optimale avec une ou plusieurs pièces 3.

Une caractéristique additionnelle concerne le fait qu'un tel cadre 24 comporte au moins un profilé en T 31, s'étendant parallèlement à deux tubes 28 de ce cadre 24 et rendu solidaire des deux autres tubes 28 de ce cadre 24. Un tel profilé en T 31 comporte deux ailes latérales 32 sur lesquelles viennent reposer les plaques 30 constituant le fond 10 du panneau 9.

Encore une autre caractéristique consiste en ce que le fond 10, respectivement une plaque 30 constituant en partie ce fond 10, est immobilisé à l'intérieur du cadre 24 par le biais de profilés en équerre 33 rendus solidaires, selon le cas, dudit cadre 24 ou d'un profilé en T 31.

Tel qu'évoqué ci-dessus, la présente invention concerne, encore, un procédé pour la gestion, au niveau d'une zone tampon 2, d'un flux de pièces 3 défilant sur un convoyeur amont 4 et en provenance d'une première unité de traitement, ceci dans l'attente de l'approvisionnement par ces pièces 3 d'un convoyeur aval 5 d'une seconde unité de traitement.

Ce procédé consiste en ce que :
- l'on réalise, à l'entrée 7 de la zone tampon 2, au moins une pile 8 de panneaux 9 comportant, chacun, un fond 10 dans lequel sont disposées une ou plusieurs pièces 3 provenant du convoyeur amont 4 ;
- après la réalisation d'au moins une pile 8 de panneaux 9, l'on stocke une telle pile 8 dans une zone de stockage 11 définie au niveau de la zone tampon 2, ceci dans l'attente de l'approvisionnement du convoyeur aval 5 par la ou les pièces 3 contenues dans les panneaux 9 d'une telle pile 8 ;
- l'on réalise, à la sortie 12 de la zone tampon 2, l'approvisionnement du convoyeur aval 5 en retirant la ou les pièces 3 disposées dans le fond 10 de chacun des panneaux 9 d'au moins une pile 8 pour les disposer sur le convoyeur aval 5.

Une autre caractéristique de ce procédé consiste en ce que, lorsque l'on réalise une pile 8 de panneaux 9 dans lesquels sont disposées des pièces 3, l'on empile, successivement, un panneau vide 9' par-dessus un panneau rempli 9 et l'on dispose dans le fond 10 du premier panneau vide 9' de cette pile 8 ainsi que dans le fond 10 de tout nouveau panneau vide 9' que l'on empile par-dessus un panneau rempli 9, au moins une pièce que l'on a prélevé par l'intermédiaire d'un moyen de prélèvement 14' (plus particulièrement un préhenseur 21) au niveau du convoyeur amont 4.

Aussi, lorsque l'on réalise une pile 8 de panneaux 9 dans lesquels sont disposées des pièces 3, l'on prélève, tout d'abord et par l'intermédiaire d'un moyen de prélèvement 14 (plus particulièrement un préhenseur 21), un panneau vide 9' au niveau d'au moins un empilement 15 de panneaux vides 9' stocké au niveau de la zone tampon 2 et l'on dispose, ensuite, ce panneau vide 9' à l'entrée 7 de la zone tampon 2, notamment par-dessus un moyen de stockage 11 ou par-dessus un panneau rempli 9, avant de disposer une ou plusieurs pièces 3 dans le fond 10 de ce panneau vide 9'.

Ce procédé consiste, encore, en ce que lorsque l'on réalise une pile 8 de panneaux 9 dans lesquels sont disposées des pièces 3, l'on prélève ces pièces 3, de manière individuelle ou par jeu de plusieurs pièces 3, au niveau du convoyeur amont 4 et l'on dispose au moins une telle pièce 3 et/ou au moins un tel jeu de pièces 3 dans un panneau (vide 9' ou partiellement rempli 9), selon une ou plusieurs rangées juxtaposées et espacées.

Après la réalisation, au niveau de l'entrée 7 de la zone tampon 2, d'une pile 8 de panneaux 9 dans lesquels sont disposées des pièces 3, l'on achemine, par l'intermédiaire de moyens d'acheminement 16 (plus particulièrement au moins un convoyeur du type susmentionné), cette pile 8 de panneaux 9 en direction de la sortie 12 de cette zone tampon 2 dans l'attente de l'approvisionnement du convoyeur aval 5 par la ou les pièces 3 contenues dans les panneaux 9 d'une telle pile 8.

Selon une autre caractéristique du procédé, lorsque l'on réalise l'approvisionnement du convoyeur aval 5, d'une part, l'on vide, un à un, les panneaux 9 d'une pile 8 en retirant, par l'intermédiaire d'un moyen de prélèvement 17/19 (plus particulièrement un préhenseur 21), la ou les pièces 3 disposées dans le fond 10 d'un tel panneau 9 pour les disposer sur le convoyeur aval 5 et, d'autre part, l'on assure, au fur et à mesure, l'évacuation, par l'intermédiaire d'un moyen de prélèvement 18/19' (plus particulièrement un préhenseur 21), des panneaux vides 9' de la pile 8 après qu'ils aient été vidés, ceci pour constituer au moins un empilement 15' de panneaux vides 9' évacués.

A ce propos, on observera que, après la réalisation, au niveau de la sortie 12 de la zone tampon 2, d'un empilement 15' de panneaux vides 9', l'on achemine, par l'intermédiaire de moyens d'acheminement 16 (plus particulièrement au moins un convoyeur du type susmentionné), cet empilement 15' de panneaux vides 9' en direction de l'entrée 7 de cette zone tampon 2 dans l'attente de la réalisation d'une nouvelle pile 8 de panneaux contenant une ou plusieurs pièces 3.

## Revendications

1. Procédé pour la gestion, au niveau d'une zone tampon (2), d'un flux de pièces (3), notamment entrant dans la composition d'au moins un élément de mobilier, défilant sur un convoyeur amont (4) et en provenance d'une première unité de traitement, ceci dans l'attente de l'approvisionnement par ces pièces (3) d'un convoyeur aval (5) d'une seconde unité de traitement, le procédé consistant en ce que :
- l'on réalise, à l'entrée (7) de la zone tampon (2), au moins une pile (8) de panneaux (9) comportant, chacun, un fond (10) dans lequel sont disposées une ou plusieurs pièces (3) provenant du convoyeur amont (4) ;
- après la réalisation d'au moins une pile (8) de panneaux (9), l'on stocke une telle pile (8) dans une zone de stockage (11) définie au niveau de la zone tampon (2), ceci dans l'attente de l'approvisionnement du convoyeur aval (5) par la ou les pièces (3) contenues dans les panneaux (9) d'une telle pile (8) ;
- l'on réalise, à la sortie (12) de la zone tampon (2), l'approvisionnement du convoyeur aval (5) en retirant la ou les pièces (3) disposées dans le fond (10) de chacun des panneaux (9) d'au moins une pile (8) pour les disposer sur le convoyeur aval (5).

2. Procédé pour la gestion d'un flux de pièces (3) selon la revendication 1, **caractérisé par le fait que**, lorsque l'on réalise une pile (8) de panneaux (9) dans lesquels sont disposées des pièces (3), l'on empile, successivement, un panneau vide (9') par-dessus un panneau rempli (9) et l'on dispose dans le fond (10) du premier panneau vide (9') de cette pile (8) ainsi que dans le fond (10) de tout nouveau panneau vide (9') que l'on empile par-dessus un panneau rempli (9), au moins une pièce (3) que l'on a prélevé par l'intermédiaire d'un moyen de prélèvement (14') au niveau du convoyeur amont (4).

3. Procédé pour la gestion d'un flux de pièces (3) selon l'une quelconque des revendications précédentes, **caractérisé par le fait que**, lorsque l'on réalise une pile (8) de panneaux (9) dans lesquels sont disposées des pièces (3), l'on prélève, tout d'abord et par l'intermédiaire d'un moyen de prélèvement (14), un panneau vide (9') au niveau d'au moins un empilement (15) de panneaux vides (9') stocké au niveau de la zone tampon (2) et l'on dispose, ensuite, ce panneau vide (9') à l'entrée (7) de la zone tampon (2), notamment par-dessus un moyen de stockage (11) ou par-dessus un panneau rempli (9), avant de disposer une ou plusieurs pièces (3) dans le fond (10) de ce panneau vide (9').

4. Procédé pour la gestion d'un flux de pièces (3) selon la revendication 3, **caractérisé par le fait que**, lorsque l'on réalise une pile (8) de panneaux (9) dans lesquels sont disposées des pièces (3), l'on prélève ces pièces (3), de manière individuelle ou par jeu de plusieurs pièces (3), au niveau du convoyeur amont (4) et l'on dispose au moins une telle pièce (3) et/ou au moins un tel jeu de pièces (3) dans un panneau (9, 9'), selon une ou plusieurs rangées juxtaposées et espacées.

5. Procédé pour la gestion d'un flux de pièces (3) selon l'une quelconque des revendications précédentes, **caractérisé par le fait que**, après la réalisation, au niveau de l'entrée (7) de la zone tampon (2), d'une pile (8) de panneaux (9) dans lesquels sont disposées des pièces (3), l'on achemine, par l'intermédiaire de moyens d'acheminement (16), cette pile (8) de panneaux (9) en direction de la sortie (12) de cette zone tampon (2) dans l'attente de l'approvisionnement du convoyeur aval (5) par la ou les pièces (3) contenues dans les panneaux (9) d'une telle pile (8).

6. Procédé pour la gestion d'un flux de pièces (3) selon l'une quelconque des revendications précédentes, **caractérisé par le fait que**, lorsque l'on réalise l'approvisionnement du convoyeur aval (5), d'une part, l'on vide, un à un, les panneaux (9) d'une pile (8) en retirant, par l'intermédiaire d'un moyen de prélèvement (19), la ou les pièces disposées dans le fond (10) d'un tel panneau (9) pour les disposer sur le convoyeur aval (5) et, d'autre part, l'on assure, au fur et à mesure, l'évacuation, par l'intermédiaire d'un moyen de prélèvement (19'), des panneaux (9') de la pile (8) après qu'ils aient été vidés, ceci pour constituer au moins un empilement (15') de panneaux vides (9') évacués.

7. Installation (1) pour la gestion, au niveau d'une zone tampon (2), d'un flux de pièces (3), notamment entrant dans la composition d'au moins un élément de mobilier, défilant sur un convoyeur amont (4) et en provenance d'une première unité de traitement, ceci dans l'attente de l'approvisionnement par ces pièces (3) d'un convoyeur aval (5) d'une seconde unité de traitement, l'installation comportant :
- des panneaux (9,9') comportant, chacun, un fond (10);
- des moyens (6) pour réaliser, à l'entrée (7) de la zone tampon (2), au moins une pile (8) de panneaux (9) dans le fond (10) desquels sont disposées une ou plusieurs pièces (3) provenant du convoyeur amont (4) ;
- des moyens (11) pour stocker, dans une zone de stockage définie au niveau de la zone tampon (2), au moins une pile (8) de panneaux (9) ainsi réalisée, ceci dans l'attente de l'approvisionnement du convoyeur aval (5) par les pièces (3) contenues dans les panneaux (9) d'une telle pile (8) ;
- à la sortie (12) de la zone tampon (2), des moyens (13) pour approvisionner le convoyeur aval (5) en pièces (3) disposées dans le fond (10) de chacun des panneaux (9) d'au moins une pile (8).

8. Installation (1) pour la gestion d'un flux de pièces (3) selon la revendication 7, **caractérisée par le fait que** les moyens (6) pour réaliser une pile (8) comportent un moyen (14) pour prélever au moins un panneau vide (9') au niveau d'un empilement (15) de panneaux vides (9') et pour disposer un tel panneau vide (9'), soit sur un moyen de stockage (11) que comporte l'installation (1) au niveau de la zone tampon (2), soit sur un panneau (9) ou sur une pile (8) de panneaux (9) disposé sur un tel moyen de stockage (11).

9. Installation (1) pour la gestion d'un flux de pièces (3) selon l'une quelconque des revendications 7 ou 8, **caractérisée par le fait que** les moyens (6) pour réaliser une pile (8) comportent un moyen (14') pour prélever au moins une pièce (3) au niveau du convoyeur amont (4) et pour disposer cette ou ces pièces (3) dans le fond (10) d'un panneau (9, 9'), soit disposé sur un moyen de stockage (11) que comporte l'installation (1) au niveau de la zone tampon (2), soit disposé lui-même (9, 9') sur un panneau (9) ou sur une pile (8) de panneaux (9) disposé sur un tel moyen de stockage (11).

10. Installation (1) pour la gestion d'un flux de pièces (3) selon la revendication 9, **caractérisée par le fait que** le moyen (14') pour prélever au moins une pièce (3) est conçu pour prélever, à la fois, un jeu de plusieurs pièces (3) disposées selon une file sur le convoyeur amont (4) et pour déposer un tel jeu de pièces (3) au fond (10) d'un panneau (9, 9').

11. Installation (1) pour la gestion d'un flux de pièces (3) selon l'une quelconque des revendications 9 ou 10, **caractérisée par le fait que** le moyen (14') pour prélever au moins une pièce (3) est conçu pour prélever, en fonction des caractéristiques de cette ou ces pièces (3), une unique pièce (3) ou une pluralité de pièces (3) et pour déposer, an fur et à mesure, la ou les pièces (3) prélevées simultanément dans le fond (10) d'un panneau (9 ; 9') selon une ou plusieurs rangées juxtaposées et espacées.

12. Installation (1) pour la gestion d'un flux de pièces (3) selon l'une quelconque des revendications 7 à 11, **caractérisée par le fait qu'**elle comporte des moyens (16) pour acheminer une pile (8) de panneaux (9) comportant, chacun, au moins une pièce (3) disposée dans son fond (10), ceci entre l'entrée (7) de la zone tampon (2) et la sortie (12) de cette zone tampon (2), de tels moyens (16) d'acheminement étant, au moins en partie, constitués par un convoyeur, notamment à rouleaux.

13. Installation (1) pour la gestion d'un flux de pièces (3) selon l'une quelconque des revendications 7 à 12, **caractérisée par le fait que** les moyens (13) pour approvisionner le convoyeur aval (5) comportent, d'une part, des moyens (17) pour retirer la ou les pièces (3) disposées dans le fond (10) de chacun des panneaux (9) d'une pile (8) pour les disposer sur le convoyeur aval (5) et, d'autre part, des moyens (18) pour évacuer, au fur et à mesure, chaque panneau vide (9') de cette pile (8) après que toutes les pièces (3) aient été retirées d'un tel panneau (9), ceci pour réaliser, au niveau d'un moyen de stockage (11), au moins un empilement (15') de panneaux vides (9').

14. Installation (1) pour la gestion d'un flux de pièces (3) selon la revendication 13, **caractérisée par le fait que** les moyens (17) pour retirer la ou les pièces (3) d'un panneau (9) et/ou les moyens (18) pour évacuer un panneau vide (9') sont constitués par un moyen (19, 19') pour prélever, respectivement, au moins une pièce (3) et/ou un panneau vide (9').

15. Installation (1) pour la gestion d'un flux de pièces (3) selon l'une quelconque des revendications 13 ou 14, **caractérisée par le fait qu'**elle comporte des moyens (16) pour acheminer un empilement (15') de panneaux vides (9') entre la sortie (12) de la zone tampon (2) et l'entrée (7) de cette zone tampon (2), de tels moyens d'acheminement (16) étant, au moins en partie, constitués par un convoyeur, notamment à rouleaux.

16. Installation (1) pour la gestion d'un flux de pièces (3) selon l'une quelconque des revendications 7 à 15, **caractérisée par le fait que** les moyens (11) de stockage d'au moins une pile (8) ou d'au moins un empilement (15, 15') sont constitués par des moyens (20) d'acheminement d'une telle pile (8) ou d'un tel empilement (15, 15') de panneaux (9').

17. Installation (1) pour la gestion d'un flux de pièces (3) selon l'une quelconque des revendications 9 à 11 ou 14, **caractérisée par le fait que** le moyen (14, 14', 19, 19') pour prélever, selon le cas, un panneau vide (9') et/ou au moins une pièce (3) est constitué par un préhenseur (21) monté mobile au moins par rapport au convoyeur, selon le cas, amont (4) et/ou aval (5), notamment au dessus d'un tel convoyeur, ainsi que, selon le cas, par rapport à au moins une pile (8) de panneaux (9) contenant, chacun, au moins une pièce (3) et/ou par rapport à au moins un empilement (15, 15') de panneaux vides (9').

18. Installation (1) pour la gestion d'un flux de pièces (3) selon la revendication 17, **caractérisée par le fait que** le préhenseur (21) comporte des moyens de succion, notamment par aspiration, destinés à coopérer avec un panneau vide (9') et/ou au moins une pièce (3) afin de prélever ceux-ci (9', 3).

19. Installation (1) pour la gestion d'un flux de pièces (3) selon l'une quelconque des revendications 17 ou 18, **caractérisée par le fait que** le préhenseur (21) est monté en déplacement, notamment en translation et/ou par l'intermédiaire d'un chariot (22), sur un rail de guidage (23) s'étendant par-dessus le convoyeur amont (4) ainsi que par-dessus la pile (8) de panneau (9) en cours de réalisation et/ou par-dessus le convoyeur aval (5) ainsi que par-dessus la pile (8) de panneaux (9) en cours d'approvisionnement de ce convoyeur aval (5).

20. Installation (1) pour la gestion d'un flux de pièces (3) selon l'une quelconque des revendications 7 à 19, **caractérisée par le fait que** les panneaux (9) sont constitués, d'une part, par un cadre (24) et, d'autre part, par un fond (10) implanté à l'intérieur de ce cadre (24) en sorte qu'une surface de réception (25) d'au moins une pièce (3) que présente ce fond (10) soit située à une distance du bord supérieur (27) de ce cadre (24) au moins égale à l'épaisseur d'une telle pièce (3).

21. Installation (1) pour la gestion d'un flux de pièces (3) selon la revendication 20, **caractérisée par le fait que** le cadre (24) est constitué par un assemblage, notamment à angle droit, de tubes rigides (28), plus particulièrement réalisés en un matériau métallique ou analogue, notamment en acier, par exemple des tubes creux de section carrée ou rectangulaire.

22. Installation (1) pour la gestion d'un flux de pièces (3) selon la revendication 21, **caractérisée par le fait que** chaque tube (28) du cadre (24) comporte une aile latérale (29) s'étendant en direction d'un autre tube (28) de ce cadre (24) et sur laquelle (29) vient reposer le fond (10).

23. Installation (1) pour la gestion d'un flux de pièces (3) selon l'une quelconque des revendications 20 à 22, **caractérisée par le fait que** le fond (10) est constitué par au moins une plaque (30), voire par une juxtaposition de plaques (30), définies en un matériau alvéolaire dont les alvéoles, notamment de forme hexagonale, s'étendent perpendiculairement à la surface de réception (25) d'au moins une pièce (3).

24. Installation (1) pour la gestion d'un flux de pièces (3) selon l'une quelconque des revendications 21 à 23, **caractérisée par le fait que** le cadre (24) comporte au moins un profilé en T (31), s'étendant parallèlement à deux tubes (28) du cadre (24), rendu solidaire des deux autres tubes (28) de ce cadre (24), comportant deux ailes latérales (32) sur lesquelles viennent reposer des plaques (30) constituant le fond (10).

25. Installation (1) pour la gestion d'un flux de pièces (3) selon l'une quelconque des revendications 20 à 24, **caractérisée par le fait que** le fond (10), respectivement une plaque (30) constituant en partie ce fond (10), est immobilisé à l'intérieur du cadre (24) par le biais de profilés en équerre (33) rendus solidaires, selon le cas, dudit cadre (24) ou d'un profilé en T (31).

## Claims

1. Method for controlling, at the level of a buffer area (2), a flow of work-pieces (3), namely entering into the composition of at least one furniture element, passing on an upstream conveyer (4) and proceeding from a first treatment unit, while waiting for the supply of a downstream conveyer (5) of a second treatment unit with work-pieces (3), the method consisting in that:
- at the inlet (7) of the buffer area (2) is formed at least one pile (8) of panels (9) each including a bottom (10) on which one or several work-pieces (3) proceeding from the upstream conveyer (4) are arranged ;
- after forming at least one pile (8) of panels (9), such a pile (8) is stored in a storage area (11) defined at the level of the buffer area (2), while waiting for the supply of the downstream conveyer (5) with the work-piece or work-pieces (3) contained in the panels (9) of such a pile (8) ;
- at the exit (12) of the buffer area (2), the supply of the downstream conveyer (5) occurs by removing the work-piece or work-pieces (3) arranged on the bottom (10) of each of the panels (9) of at least one pile (8) in order to arrange them on the downstream conveyer (5).

2. Method for controlling a flow of work-pieces (3) according to claim 1, wherein, when a pile (8) of panels (9) is formed, in which work-pieces (3) are arranged, an empty pile (9') is successively piled up on top of a full panel (9), and on the bottom (10) of the first empty panel (9') of this pile (8) as well as on the bottom (10) of any new empty panel (9') that is piled up on top of a full panel (9) is arranged at least one work-piece (3) that has been taken out through out-taking means (14') at the level of the upstream conveyer (4).

3. Method for controlling a flow of work-pieces (3) according to any of the preceding claims, wherein, when a pile (8) of panels (9) is formed, in which work-pieces (3) are arranged, an empty panel (9') is first of all taken out through out-taking means (14) at the level of at least one piling up (15) of empty panels (9') stored at the level of the buffer area (2) and this empty panel (9') is then arranged at the inlet (7) of the buffer area (2), namely on top of storage means (11) or on top of a full panel (9), before arranging one or several work-pieces (3) on the bottom (10) of this empty panel (9').

4. Method for controlling a flow of work-pieces (3) according to claim 3, wherein, when a pile (8) of panels (9) is formed, in which work-pieces (3) are arranged, these work-pieces (3) are taken out individually or by a set of several work-pieces (3) at the level of the upstream conveyer (4) and at least one such work-piece (3) and/or at least one such set of work-pieces (3) is arranged in a panel (9, 9'), in one or several juxtaposed and spaced apart rows.

5. Method for controlling a flow of work-pieces (3) according to any of the preceding claims, wherein, after forming, at the level of the inlet (7) of the buffer area (2), a pile (8) of panels (9) in which work-pieces (3) are arranged, this pile (8) of panels (9) is conveyed through conveying means (16) towards the exit (12) of this buffer area (2), while waiting for the supply of the downstream conveyer (5) with the work-piece or work-pieces (3) contained in the panels (9) of such a pile (8).

6. Method for controlling a flow of work-pieces (3) according to any of the preceding claims, wherein, when carrying out the supply of the downstream conveyer (5), on the one hand, the panels (9) of a pile (8) are emptied one by one by removing, through out-taking means (19), the work-piece or work-pieces arranged on the bottom (10) of such a panel (9) in order to arrange them onto the downstream conveyer (5) and, on the other hand, the evacuation of the panels (9') of the pile (8) is gradually ensured, through out-taking means (19'), after they have been emptied, in order to form at least one piling up (15') of evacuated empty panels (9').

7. Installation (1) for controlling, at the level of a buffer area (2), a flow of work-pieces (3), namely entering into the composition of at least one furniture element, passing on an upstream conveyer (4) and proceeding from a first treatment unit, while waiting for the supply of a downstream conveyer (5) of a second treatment unit with work-pieces (3), the installation including :
- panels (9, 9') each including a bottom (10) ;
- means (6) for forming, at the inlet (7) of the buffer area (2), at least one pile (8) of panels (9) in the bottom (10) of which are arranged one or several work-pieces (3) proceeding from the upstream conveyer (4) ;
- means (11) for storing, in a storage area defined at the level of the buffer area (2), at least one pile (8) of panels (9) thus formed, while waiting for the supply of the downstream conveyer (5) with the work-pieces (3) contained in the panels (9) of such a pile (8) ;
- at the exit (12) of the buffer area (2), means (13) for supplying the downstream conveyer (5) with work-pieces (3) arranged on the bottom (10) of each of the panels (9) of at least one pile (8).

8. Installation (1) for controlling a flow of work-pieces (3) according to claim 7, wherein the means (6) for forming a pile (8) include means (14) for taking out at least one empty panel (9') at the level of a piling up (15) of empty panels (9') and for arranging such an empty panel (9') either on storage means (11) the installation (1) includes at the level of the buffer area (2) or on a panel (9) or on a pile (8) of panels (9) arranged on such storage means (11).

9. Installation (1) for controlling a flow of work-pieces (3) according to any of the claims 7 or 8, wherein the means (6) for forming a pile (8) include means (14') for taking out at least one work-piece (3) at the level of the upstream conveyer (4) and for arranging this or these work-pieces (3) on the bottom (10) of a panel (9, 9') either arranged on storage means (11) the installation (1) includes at the level of the buffer area (2) or arranged itself (9, 9') on a panel (9) or on a pile (8) of panels (9) arranged on such storage means (11).

10. Installation (1) for controlling a flow of work-pieces (3) according to claim 9, wherein the means (14') for taking out at least one work-piece (3) is designed to take out at the same time a set of several work-pieces (3) arranged in a pile on the upstream conveyer (4) and to place such a set of work-pieces (3) on the bottom (10) of a panel (9, 9').

11. Installation (1) for controlling a flow of work-pieces (3) according to any of the claims 9 or 10, wherein the means (14') for taking out at least one work-piece (3) is designed to take out, depending on the characteristics of this or these work-pieces (3), one single work-piece (3) or a plurality of work-pieces (3) and for gradually arranging the work-piece or work-pieces (3) simultaneously taken out on the bottom (10) of a panel (9 ; 9') in one or several juxtaposed and spaced apart rows.

12. Installation (1) for controlling a flow of work-pieces (3) according to any of the claims 7 to 11, wherein the installation includes means (16) for conveying a pile (8) of panels (9) each including at least one work-piece (3) arranged on its bottom (10), between the inlet (7) of the buffer area (2) and the exit (12) of this buffer area (2), such means (16) for conveying being, at least partially, formed of a conveyer, namely a roller conveyer.

13. Installation (1) for controlling a flow of work-pieces (3) according to any of the claims 7 to 12, wherein the means (13) for supplying the downstream conveyer (5) include, on the one hand, means (17) for removing the work-piece or work-pieces (3) arranged on the bottom (10) of each of the panels (9) of a pile (8) in order to arrange them on the downstream conveyer (5) and, on the other hand, means (18) for gradually evacuating each empty panel (9') of this pile (8) after all the work-pieces (3) have been removed from such a panel (9), in order to form, at the level of storage means (11), at least one piling up (15') of empty panels (9').

14. Installation (1) for controlling a flow of work-pieces (3) according to claim 13, wherein the means (17) for removing the work-piece or work-pieces (3) from a panel (9) and/or the means (18) for evacuating an empty panel (9') are formed of means (19, 19') for taking out at least one work-piece (3) and/or an empty panel (9'), respectively.

15. Installation (1) for controlling a flow of work-pieces (3) according to any of the claims 13 or 14, wherein the installation includes means (16) for conveying a piling up (15') of empty panels (9') between the exit (12) of the buffer area (2) and the inlet (7) of this buffer area (2), such conveying means (16) being, at least partially, formed of a conveyer, namely a roller conveyer.

16. Installation (1) for controlling a flow of work-pieces (3) according to any of the claims 7 to 15, wherein the means (11) for storing at least one pile (8) or at least one piling up (15, 15') are formed of means (20) for conveying such a pile (8) or such a piling up (15, 15') of panels (9').

17. Installation (1) for controlling a flow of work-pieces (3) according to any of the claims 9 to 11 or 14, wherein the means (14, 14', 19, 19') for taking out, as the case may be, an empty panel (9') and/or at least one work-piece (3) is formed of a gripper (21) mounted movably at least with respect to the upstream (4) and/or downstream (5) conveyer, as the case may be, namely above such a conveyer, as well as, as the case may be, with respect to at least one pile (8) of panels (9) each containing at least one work-piece (3) and/or with respect to at least one piling up (15, 15') of empty panels (9').

18. Installation (1) for controlling a flow of work-pieces (3) according to claim 17, wherein the gripper (21) includes suction means, namely by suction, aimed at cooperating with an empty panel (9') and/or at least with one work-piece (3), in order to take them (9', 3) out.

19. Installation (1) for controlling a flow of work-pieces (3) according to any of the claims 17 or 18, wherein the gripper (21) is mounted movably, namely in translation and/or through a carriage (22), on a guiding rail (23) extending above the upstream conveyer (4) as well as above the pile (8) of panels (9) during its forming and/or above the downstream conveyer (5) as well as above the pile (8) of panels (9) during the supply of this downstream conveyer (5).

20. Installation (1) for controlling a flow of work-pieces (3) according to any of the claims 7 to 19, wherein the panels (9) are formed, on the one hand, by a frame (24) and, on the other hand, by a bottom (10) implanted inside this frame (24) so that a surface for receiving (25) at least one work-piece (3) this bottom (10) has is located at a distance from the upper edge (27) of this frame (24) at least equal to the thickness of such a work-piece (3).

21. Installation (1) for controlling a flow of work-pieces (3) according to claim 20, wherein the frame (24) is formed of an assembling, namely at right angles, of rigid tubes (28), in particular made out of a metallic material or the like, namely steel, for example hollow tubes having a square or rectangular cross-section.

22. Installation (1) for controlling a flow of work-pieces (3) according to claim 21, wherein each tube (28) of the frame (24) includes a side wing (29) extending towards another tube (28) of this frame (24) and on which (29) the bottom (10) rests.

23. Installation (1) for controlling a flow of work-pieces (3) according to any of the claims 20 to 22, wherein the bottom (10) is formed of at least one plate (30), even of a juxtaposition of plates (30), made of foam material the cells of which, namely hexagonal cells, extend perpendicularly to the surface for receiving (25) of at least one work-piece (3).

24. Installation (1) for controlling a flow of work-pieces (3) according to any of the claims 21 to 23, wherein the frame (24) includes at least one T-shaped profile bar (31), extending parallel to two tubes (28) of the frame (24), made integral with the other two tubes (28) of this frame (24), including two side wings (32) on which plates (30) forming the bottom (10) rest.

25. Installation (1) for controlling a flow of work-pieces (3) according to any of the claims 20 to 24, wherein the bottom (10) or a plate (30) partially forming this bottom (10), respectively, is immobilised inside the frame (24) through right-angle profile bars (33) made integral, as the case may be, with said frame (24) or with a T-shaped profile bar (31).

## Patentansprüche

1. Verfahren zur Steuerung, im Bereich einer Pufferzone (2), eines Stroms von Werkstücken (3), die nämlich in der Zusammensetzung von wenigstens eines Möbelelements vorkommen, und sich auf einem stromaufwärtsen Förderband (4) bewegen und von einer ersten Behandlungseinheit kommen, in Erwartung der Versorgung eines stromabwärtsen Förderbandes (5) einer zweiten Behandlungseinheit mit Werkstücken (3), wobei das Verfahren darin besteht, dass :
- am Eingang (7) der Pufferzone (2) wenigstens ein Stapel (8) von Brettern (9) gebildet wird, die jeweils einen Boden (10) umfassen, auf dem ein bzw. mehrere vom stromaufwärtsen Förderband (4) kommende Werkstücke (3) angeordnet werden ;
- nach Bildung von wenigstens eines Stapels (8) von Brettern (9) ein solcher Stapel (8) in einer Lagerzone (11) gelagert wird, die im Bereich der Pufferzone (2) definiert ist, in Erwartung der Versorgung des stromabwärtsen Förderbandes (5) mit dem Werkstück bzw. den Werkstücken (3), die in den Brettern (9) eines solchen Stapels (8) enthalten sind ;
- am Ausgang (12) der Pufferzone (2) die Versorgung des stromabwärtsen Förderbandes (5) erfolgt, indem das Werkstück bzw. die Werkstücke (3), die auf dem Boden (10) jedes Bretts (9) von wenigstens einem Stapel (8) angeordnet sind, herausgenommen werden, um sie auf dem stromabwärtsen Förderband (5) anzuordnen.

2. Verfahren zur Steuerung eines Stroms von Werkstücken (3) nach Anspruch 1, **dadurch gekennzeichnet, dass,** wenn ein Stapel (8) von Brettern (9), in dem Werkstücke (3) angeordnet sind, gebildet ist, aufeinanderfolgend ein leerer Stapel (9') über ein volles Brett (9) aufgestapelt wird, und auf dem Boden (10) des ersten leeren Bretts (9') dieses Stapels (8) sowie auf dem Boden (10) jedes neuen leeren Bretts (9'), das über ein volles Brett (9) aufgestapelt ist, wenigstens ein Werkstück (3), das über ein Entnahmemittel (14') im Bereich des stromaufwärtsen Förderbandes (4) entnommen wurde, angeordnet wird.

3. Verfahren zur Steuerung eines Stroms von Werkstücken (3) nach irgendeinem der vorgeheden Ansprüche, **dadurch gekennzeichnet, dass,** wenn ein Stapel (8) von Brettern (9), in dem Werkstücke (3) angeordnet sind, gebildet ist, zunächst über ein Entnahmemittel (14) ein leerer Stapel (9') im Bereich von wenigstens einer im Bereich der Pufferzone (2) gelagerten Aufstapelung (15) von leeren Brettern (9') entnommen wird und dieses leere Brett (9') dann am Eingang (7) der Pufferzone (2), nämlich über ein Lagermittel (11) oder über ein volles Brett (9), angeordnet wird, bevor ein bzw. mehrere Werkstücke (3) auf dem Bodem (10) dieses leeren Bretts (9') angeordnet werden.

4. Verfahren zur Steuerung eines Stroms von Werkstücken (3) nach Anspruch 3, **dadurch gekennzeichnet, dass,** wenn ein Stapel (8) von Brettern (9), in dem Werkstücke (3) angeordnet sind, gebildet ist, diese Werkstücke (3) einzeln oder in einer Gesamtheit von mehreren Werkstücken (3) im Bereich des stromaufwärtsen Förderbandes (4) entnommen werden und wenigstens ein solches Werkstück (3) und/oder wenigstens eine solche Gesamtheit von Werkstücken (3) auf einem Brett (9, 9') nach einer oder mehreren aneinander gereihten und beabstandeten Reihen angeordnet wird.

5. Verfahren zur Steuerung eines Stroms von Werkstücken (3) nach irgendeinem der vorgehenden Ansprüche, **dadurch gekennzeichnet, dass** nach der Bildung im Bereich des Eingangs (7) der Pufferzone (2) eines Stapels (8) von Brettern (9), in dem Werkstücke (3) angeordnet sind, dieser Stapel (8) von Brettern (9) über Fördermittel (16) in Richtung auf den Ausgang (12) dieser Pufferzone (2) gefördert wird, in Erwartung der Versorgung des stromabwärtsen Förderbandes (5) mit dem bzw. den in den Brettern (9) eines solchen Stapels (8) enthaltenen Werkstücken (3).

6. Verfahren zur Steuerung eines Stroms von Werkstücken (3) nach irgendeinem der vorgehenden Ansprüche, **dadurch gekennzeichnet, dass** wenn die Versorgung des stromabwärtsen Förderbandes (5) durchgeführt wird, einerseits die Bretter (9) eines Stapels (8) einzeln entleert werden, indem das Werkstück bzw. die Werkstücke, die auf dem Boden (10) eines solchen Bretts (9) angeordnet sind, über ein Entnahmemittel (19) entnommen werden, um sie auf dem stromabwärtsen Förderband (5) anzuordnen, und andererseits die Abfuhr der Bretter (9') des Stapels (8) über ein Entnahmemittel (19') allmählich gesichert wird, nachdem diese entleert wurden, um wenigstens eine Aufstapelung (15') von abgeführten leeren Brettern (9') zu bilden.

7. Anordnung (1) zur Steuerung, im Bereich einer Pufferzone (2), eines Stroms von Werkstücken (3), die nämlich in der Zusammensetzung von wenigstens eines Möbelelements vorkommen, und sich auf einem stromaufwärtsen Förderband (4) bewegen und von einer ersten Behandlungseinheit kommen, in Erwartung der Versorgung eines stromabwärtsen Förderbandes (5) einer zweiten Behandlungseinheit mit Werkstücken (3), wobei die Anordnung folgendes umfasst :
- Bretter (9, 9'), die jeweils einen Boden (10) umfassen ;
- Mittel (6) zum Bilden, am Eingang (7) der Pufferzone (2), von wenigstens einem Stapel (8) von Brettern (9), auf deren Boden (10) ein oder mehrere Werkstücke (3), die vom stromaufwärtsen Förderband (4) kommen, angeordnet sind ;
- Mittel (11) zum Lagern, in einer im Bereich der Pufferzone (2) definierten Lagerzone, von wenigstens einem also gebildeten Stapel (8) von Brettern (9), in Erwartung der Versorgung des stromabwärtsen Förderbandes (5) mit in den Brettern (9) eines solchen Stapels (8) enthaltenen Werkstücken (3) ;
- am Ausgang (12) der Pufferzone (2), Mittel (13) zum Versorgen des stromabwärtsen Förderbandes (5) mit Werkstücken (3), die auf dem Boden (10) jedes der Bretter (9) von wenigstens einem Stapel (8) angeordnet sind.

8. Anordnung (1) zur Steuerung eines Stroms von Werkstücken (3) nach Anspruch 7, **dadurch gekennzeichnet, dass** die Mittel (6) zum Bilden eines Stapels (8) ein Mittel (14) umfassen, um wenigstens einen leeren Stapel (9') im Bereich einer Aufstapelung (15) von leeren Brettern (9') zu entnehmen und ein solches leeres Brett (9') entweder auf einem Lagermittel (11), welche die Anordnung (1) im Bereich der Pufferzone (2) umfasst oder auf einem Brett (9) oder einem Stapel (8) von Brettern (9), der auf einem solchen Lagermittel (11) angeordnet ist, anzuordnen.

9. Anordnung (1) zur Steuerung eines Stroms von Werkstücken (3) nach irgendeinem der Ansprüche 7 oder 8, **dadurch gekennzeichnet, dass** die Mittel (6) zum Bilden eines Stapels (8) ein Mittel (14') umfassen, um wenigstens ein Werkstück (3) im Bereich des stromaufwärtsen Förderbandes (4) zu entnehmen und um dieses bzw. diese Werkstücke (3) auf dem Boden (10) eines Brettes (9, 9'), das entweder auf einem Lagermittel (11) angeordnet ist, welches die Anordnung (1) im Bereich der Pufferzone (2) umfasst, oder selbst (9, 9') angeordnet auf einem Brett (9) oder einem Stapel (8) von Brettern (9), der auf einem solchen Lagermittel (11) angeordnet ist, anzuordnen.

10. Anordnung (1) zur Steuerung eines Stroms von Werkstücken (3) nach Anspruch 9, **dadurch gekennzeichnet, dass** die Mittel (14') zum Entnehmen von wenigstens einem Werkstück (3) vorgesehen ist, um gleichzeitig eine Gesamtheit von mehreren Werkstücken (3) zu entnehmen, die in einem Stapel auf dem stromaufwärtsen Förderband (4) angeordnet sind, um eine deartige Gesamtheit von Werkstücken (3) auf dem Boden (10) eines Brettes (9, 9') zu legen.

11. Anordnung (1) zur Steuerung eines Stroms von Werkstücken (3) nach irgendeinem der Ansprüche 9 oder 10, **dadurch gekennzeichnet, dass** die Mittel (14') zum Entnehmen von wenigstens einem Werkstück (3) vorgesehen ist, um, je nach den Merkmalen dieses bzw. dieser Werkstücke (3), ein einziges Werkstück (3) oder eine Mehrheit von Werkstücken (3) zu entnehmen und um das bzw. die Werkstücke (3), die gleichzeitig entnommen wurden, allmählich auf dem Boden (10) eines Brettes (9 ; 9') nach einer oder mehreren aneinander gereihten und beabstandeten Reihen anzuordnen.

12. Anordnung (1) zur Steuerung eines Stroms von Werkstücken (3) nach irgendeinem der Ansprüche 7 bis 11, **dadurch gekennzeichnet, dass** sie Mittel (16) zum Fördern eines Stapels (8) von Brettern (9), die jeweils wenigstens ein auf dessen Boden (10) angeordnetes Werkstück (3) umfassen, zwischen dem Eingang (7) der Pufferzone (2) und dem Ausgang (12) dieser Pufferzone (2), umfasst, wobei solche Mittel (16) zum Fördern wenigstens zum Teil aus einem Förderband, nämlich einem Rollenförderband, bestehen.

13. Anordnung (1) zur Steuerung eines Stroms von Werkstücken (3) nach irgendeinem der Ansprüche 7 bis 12, **dadurch gekennzeichnet, dass** die Mittel (13) zum Versorgen des stromabwärtsen Förderbandes (5) einerseits Mittel (17), um das bzw. die Werkstücke (3), die auf dem Boden (10) jeder der Bretter (9) eines Stapels (8) angeordnet sind, zu entnehmen, um sie auf dem stromabwärtsen Förderband (5) anzuordnen, und andererseits Mittel (18), um jedes leeres Brett (9') dieses Stapels (8) allmählich abzuführen, nachdem alle Werkstücke (3) von einem solchen Brett (9) entfernt wurden, um im Bereich eines Lagermittels (11) wenigstens eine Aufstapelung (15') von leeren Brettern (9') zu bilden, umfassen.

14. Anordnung (1) zur Steuerung eines Stroms von Werkstücken (3) nach Anspruch 13, **dadurch gekennzeichnet, dass** die Mittel (17) zum Entfernen des bzw. der Werkstücke (3) von einem Brett (9) und/oder die Mittel (18) zum Abführen eines leeren Brettes (9') aus Mitteln (19, 19') zum Entnehmen von respektive wenigstens einem Werkstück (3) und/oder einem leeren Brett (9') bestehen.

15. Anordnung (1) zur Steuerung eines Stroms von Werkstücken (3) nach irgendeinem der Ansprüche 13 oder 14, **dadurch gekennzeichnet, dass** sie Mittel (16) zum Fördern einer Aufstapelung (15') von leeren Brettern (9') zwischen dem Ausgang (12) der Pufferzone (2) und dem Eingang (7) dieser Pufferzone (2) umfasst, wobei solche Fördermittel (16) wenigstens zum Teil aus einem Förderband, nämlich einem Rollenförderband, bestehen.

16. Anordnung (1) zur Steuerung eines Stroms von Werkstücken (3) nach irgendeinem der Ansprüche 7 bis 15, **dadurch gekennzeichnet, dass** die Mittel (11) zum Lagern von wenigstens einem Stapel (8) oder wenigstens einer Aufstapelung (15, 15') aus Mitteln (20) zum Fördern eines solchen Stapels (8) oder einer solchen Aufstapelung (15, 15') von Brettern (9') bestehen.

17. Anordnung (1) zur Steuerung eines Stroms von Werkstücken (3) nach irgendeinem der Ansprüche 9 bis 11 oder 14, **dadurch gekennzeichnet, dass** die Mittel (14, 14', 19, 19') zum Entnehmen, je nach dem Fall, eines leeren Brettes (9') und/oder wenigstens eines Werkstücks (3) aus einem Greifer (21) bestehen, der bewegbar, je nach dem Fall, wenigstens bezüglich dem aufwärtsen (4) und/oder abwärtsen (5) Förderband, nämlich oberhalb eines solchen Förderbandes, sowie, je nach dem Fall, bezüglich wenigstens eines Stapels (8) von Brettern (9), die jeweils wenigstens ein Werkstück (3) enthalten, und/oder bezüglich wenigstens einer Aufstapelung (15, 15') von leeren Brettern (9') montiert ist.

18. Anordnung (1) zur Steuerung eines Stroms von Werkstücken (3) nach Anspruch 17, **dadurch gekennzeichnet, dass** der Greifer (21) Saugmittel, nämlich durch Ansaugen, umfasst, die dazu bestimmt sind, mit einem leeren Brett (9') und/oder wenigstens einem Werkstück (3) zusammenzuwirken, um diese (9', 3) zu entnehmen.

19. Anordnung (1) zur Steuerung eines Stroms von Werkstücken (3) nach irgendeinem der Ansprüche 17 oder 18, **dadurch gekennzeichnet, dass** der Greifer (21) bewegbar, nämlich in Translation und/oder über einen Schlitten (22), auf einer Führungsschiene (23) montiert ist, die sich oberhalb des stromaufwärtsen Förderbandes (4) sowie oberhalb des Stapels (8) von Brettern (9) während der Bildung dieses letzteren und/oder oberhalb des stromabwärtsen Förderbandes (5) sowie auch oberhalb des Stapels (8) von Brettern (9) während der Versorgung dieses stromabwärtsen Förderbandes (5) erstreckt.

20. Anordnung (1) zur Steuerung eines Stroms von Werkstücken (3) nach irgendeinem der Ansprüche 7 bis 19, **dadurch gekennzeichnet, dass** die Bretter (9) einerseits aus einem Rahmen (24) und andererseits aus einem Boden (10) bestehen, der so innerhalb dieses Rahmens (24) angebracht ist, dass eine Oberflache zum Aufnehmen (25) von wenigstens einem Werkstück (3), welche dieser Boden (10) aufweist, sich auf einem Abstand vom oberen Rand (27) dieses Rahmens (24) befindet, die wenigstens gleich der Dicke eines solchen Werkstückes (3) ist.

21. Anordnung (1) zur Steuerung eines Stroms von Werkstücken (3) nach Anspruch 20, **dadurch gekennzeichnet, dass** der Rahmen (24) aus einer nämlich rechtwinkligen Zusammenfügung von starren Rohren (28), insbesondere aus metallischem Material oder dergleichen, nämlich Stahl, zum Beispiel aus im Querschnitt Vierkant- oder rechteckigen Hohlrohren, besteht.

22. Anordnung (1) zur Steuerung eines Stroms von Werkstücken (3) nach Anspruch 21, **dadurch gekennzeichnet, dass** jedes Rohr (28) des Rahmens (24) einen seitlichen Flügel (29) umfasst, der sich in Richtung auf ein anderes Rohr (28) dieses Rahmens (24) erstreckt und auf dem (29) der Boden (10) ruht.

23. Anordnung (1) zur Steuerung eines Stroms von Werkstücken (3) nach irgendeinem der Ansprüche 20 bis 22, **dadurch gekennzeichnet, dass** der Boden (10) aus wenigstens einer Platte (30), sogar aus einer Aneinanderreihung von Platten (30) aus Schaummaterial besteht, dessen Zellen, nämlich Sechskantzellen, sich senkrecht zur Oberfläche zum Aufnehmen (25) von wenigstens einem Werkstück (3) erstrecken.

24. Anordnung (1) zur Steuerung eines Stroms von Werkstücken (3) nach irgendeinem der Ansprüche 21 bis 23, **dadurch gekennzeichnet, dass** der Rahmen (24) wenigstens ein T-förmiges Profileisen (31) umfasst, das sich parallel zu zwei Rohren (28) des Rahmens (24) erstreckt, fest mit zwei anderen Rohren (28) dieses Rahmens (24) verbunden ist, die zwei seitliche Flügel (32) umfassen, auf denen den Boden (10) bildende Platten (30) ruhen.

25. Anordnung (1) zur Steuerung eines Stroms von Werkstücken (3) nach nach irgendeinem der Ansprüche 20 bis 24, **dadurch gekennzeichnet, dass** der Boden (10) bzw. eine Platte (30), die zum Teil diesen Boden (10) bildet, über rechtwinklige Profileisen (33), die je nach dem Fall fest mit dem besagten Rahmen (24) oder mit einem T-förmigen Profileisen (31) verbunden sind, unbeweglich innerhalb des Rahmens (24) gemacht ist.
